# EUROPÄISCHE PATENTSCHRIFT

(11) **EP 2 221 193 B1**
(45) Veröffentlichungstag und Bekanntmachung des Hinweises auf die Patenterteilung: **03.04.2013**
(21) Anmeldenummer: 10001867.0
(22) Anmeldetag: 24.02.2010
(51) Int. Cl.: B60B 5/02, B60B 27/02, B60B 27/04

(54) **Fahrradhinterradnabenbaugruppe**
Bicycle rear wheel hub component
Composant de moyeu de roue arrière de vélo

(30) Priorität: 24.02.2009 DE 102009010259
(43) Veröffentlichungstag der Anmeldung: 25.08.2010
(73) Patentinhaber: CarboFibretec GmbH, 88046 Friedrichshafen (DE)
(72) Erfinder: Wissler, Erhard, 73266 Bissingen/Teck (DE); Leschik, Thomas, 88046 Friedrichshafen (DE); Daum, Daniel, 88045 Friedrichshafen (DE)
(74) Vertreter: Winter, Brandl, Fürniss, Hübner, Röss, Kaiser, Polte - Partnerschaft

(56) Entgegenhaltungen:
- EP-A2- 1 881 221
- WO-A1-00/34056
- DE-A1-102007 026 821
- DE-U1-202004 008 009
- DE-U1-202009 008 246
- US-A- 5 647 643
- US-A1- 2008 006 500

## Beschreibung

Die Erfindung betrifft eine Fahrradhinterradnabenbaugruppe mit einer hohlzylindrischen Achse, mit zwei jeweils auf einen Endabschnitt der Achse aufsteckbaren Ausfallendengegenstücken, mit einem die Achse abschnittsweise umgebenden hohlzylindrisch ausgestalteten Rotor und einem hohlen, die Achse umgebenden Nabenkörper, wobei der Rotor und der Nabenkörper durch an der Achse angeordnete Wälzlager drehbar gelagert sind und wobei die Achse im Bereich der Endabschnitte achsaußenseitig eines Außendurchmessersprungbereichs der Achse einen geringeren Außendurchmesser als in einem mittigen Bereich aufweist.

Aus dem Stand der Technik sind Naben, insbesondere solche für Fahrräder bekannt. So offenbart die WO 00/34056 eine Fahrradhinterradnabenbaugruppe mit einer hohlzylindrischen Achse, auf die Adapterringe beidseitig aufgesteckt werden. Diese Adapterringe drücken zwei Innenringe der mit den Adapterringen in Kontakt stehenden Wälzlager auf Wulste der Hohlachse. Es werden mehrere Wälzlager verwendet, die einerseits einen Nabenkörper drehbar zur Achse lagern und andererseits einen Rotor drehbar zur Achse lagern. Zwischen dem Nabenkörper und dem Rotor, welche beide die Achse umgebend angeordnet sind, ist ein Freilaufmechanismus angeordnet. Dieser Freilaufmechanismus ermöglicht das Bewegen des Rotors in eine Rotationsrichtung relativ zum Nabenkörper und verhindert eine entgegengesetzte Drehung relativ zum Nabenkörper des Rotors.

Am Nabenkörper greifen die Speichen an, die eine kraftübertragende Verbindung zu einer Felge eines Hinterrades darstellen. Auf der Felge wiederum ist es möglich, Schläuche mit Hilfe von Drahtreifen zu befestigen oder sog. Schlauchreifen aufzukleben. Ein solches Hinterrad mit der in der WO 00/34056 offenbarten Fahrradhinterradnabenbaugruppe wird dann mittels eines Schnellspanners in den Ausfallenden eines Fahrradrahmens, und dort insbesondere am Hinterbau, befestigt. Dabei greifen die Adapterringe in schlitzförmige Ausnehmungen der Ausfallenden ein. Der Schnellspanner, der durch die Hohlachse und die beidseitig angeordneten Adapterringe hindurch ragt, wird zur Befestigung der Fahrradhinterradnabenbaugruppe im Betriebszustand des Hinterrades an dem Fahrradrahmen entsprechend befestigt und verriegelt.

Bei hochwertigen Rennrädern ist es von großer Bedeutung, dass auch die einzelnen Komponenten extrem robust, leichtgängig und gewichtsreduziert ausgestaltet sind. Auf diese Weise lässt sich das Gesamtgewicht des Rennrades vermindern, was besonders im kupierten und bergigen Gelände von großem Vorteil ist. Eine gewünschte Gewichtsreduktion soll jedoch nicht auf Kosten der Steifigkeit und Stabilität gehen, weswegen große Anstrengungen bzgl. Gewichtsreduktion und Steifigkeitserhöhung unternommen werden.

Gattungsgemässen Stand der Technik ist aus der DE 10 2007 026 821 A1 bekannt.

Es ist die Aufgabe der vorliegenden Erfindung, bestehende Konzeptionen diesbezüglich zu verbessern.

Diese Aufgabe wird bei einer gattungsgemäßen Fahrradhinterradnabenbaugruppe erfindungsgemäß dadurch gelöst, dass eine senkrecht zur Rotationsachse stehende Querschnittsfläche der Achse entlang der gesamten Rotationsachse um maximal 25% variiert, mit Ausnahme des Außendurchmessersprungbereichs an den die achsaußenseitigen Wälzlager angrenzen. Unter der Querschnittsfläche der Achse wird die Schnittfläche des hohlzylindrischen Mantels der Achse, senkrecht zu der Symmetrieachse der die Wälzlager aufnehmenden Achse verstanden. Auf diese Weise werden zu hohe Spannungen vermieden und es wird ein gleichmäßiger Kraftverlauf innerhalb der Achse gewährleistet. Selbst im Bereich der eingepressten Wälzlager finden keine Spannungssprünge statt. Die Lebensdauer einer solchen Fahrradhinterradnabenbaugruppe wird erhöht. Gleichzeitig wird es möglich, das Gewicht der Fahrradhinterradnabenbaugruppe zu reduzieren, ohne jedoch Einbußen bzgl. der Stabilität, Steifigkeit oder Lebensdauer hinnehmen zu müssen. Ferner wird die Montagefreundlichkeit einer Fahrradhinterradnabenbaugruppe erhöht. So werden für die äußeren Lager Innenringe mit größerem Innendurchmesser verwendet, als für die inneren Wälzlager. Dadurch wird eine unbeabsichtigte Montage von für einen Außenbereich gedachten Wälzlager in einem mittigen Bereich verhindert oder zumindest erschwert ist. Der Monteur erkennt eine Fehlmontage sofort und kann Korrekturmaßnahmen einleiten.

Aufwändige Reparaturmaßnahmen und Garantieleistungen werden dadurch vermieden.

Vorteilhafte Ausführungsformen werden in den Unteransprüchen beansprucht und nachfolgend näher erläutert.

Besonders gute Ergebnisse lassen sich erzielen, wenn die Querschnittsfläche um weniger als 15% variiert. Die Steifigkeit der Achse wird erhöht, was zu einer Verschleißreduktion an den einzelnen Segmenten der Achse, wie etwa dem Freilaufmechanismus führt.

Wenn die Querschnittsfläche konstant bleibt, so ist es möglich, einen besonders großen Durchmesser in einem mittleren Bereich der Achse zu wählen, um die Steifigkeit weiter zu erhöhen, ohne ein Mehrgewicht in Kauf nehmen zu müssen.

Vorteilhaft ist ferner, wenn die Achse eine konstante Wandstärke aufweist.

Auch ist es von Vorteil, wenn die Achse an beiden Enden Endabschnitte aufweist, deren Außendurchmesser um ein 1,5- bis 2,5-faches der Wandstärke geringer bemessen ist als der Außendurchmesser der Achse in einem mittleren, endabschnittsfernen Bereich. Der Spannungs- und Kräfteverlauf im Inneren der Achse ist auf diese Weise besonders gut.

Dieser Spannungs- und Kräfteverlauf ist dann nahezu optimal, wenn der Außendurchmesser im Bereich der Endabschnitte um das 2-fache der Wandstärke kleiner bemessen ist als der Außendurchmesser der Achse im mittleren Bereich.

Selbst wenn in Richtung der Rotationsachse der Achse auf die Endabschnitte Stöße aufgebracht werden, findet kein ungewolltes Einknicken der Achse im Bereich einer Schulter statt, die im Übergangsbereich zwischen dem kleineren Außendurchmesser und dem größeren Außendurchmesser vorhanden ist. Die Stabilität der Achse wird somit erhöht, wobei das Gewicht gleichzeitig minimiert ist.

Die Fahrradhinterradnabenbaugruppe lässt sich dann besonders gut auf die zu erwartende Belastung abstimmen, wenn der Nabenkörper mehrteilig ausgeführt ist.

Wenn der Nabenkörper zumindest in einem zu den Wälzlagern benachbarten Krafteinleitungsbereich mindestens einen Innennabenkörper aufweist, der auf seiner Außenseite von einem separaten Außennabenkörper umgeben ist, so kann bei minimalem Eigengewicht des Nabenkörpers der Kraftverlauf effizient vom Nabenkörper über die Wälzlager zur Achse und von diesem auf den Hinterbau des Fahrradrahmens übertragen werden.

Besonders stabil lässt sich eine leichte Fahrradhinterradnabenbaugruppe ausgestalten, wenn sich der Innennabenkörper durchgehend von einem ersten Krafteinleitungsbereich, benachbart zu einem ersten Wälzlager, zu einem zweiten Krafteinleitungsbereich, benachbart zu einem zweiten Wälzlager, erstreckt.

Da sich Faserverbundwerkstoffe für kraftflussgerechtes Konstruieren besonders eignen, ist es von Vorteil, wenn der Außennabenkörper aus Faserverbund-Werkstoff hergestellt ist, wie Kohlefaser-, Aramidfaser- oder Glasfaserverbundwerkstoff.

Das Gewicht des Nabenkörpers lässt sich weiter reduzieren, wenn der Innennabenkörper zweiteilig ausgebildet ist, derart, dass er zwischen dem ersten Krafteinleitungsbereich und dem zweiten Krafteinleitungsbereich unterbrochen ausgestaltet ist.

Ohne Stabilitätsprobleme in Kauf zu nehmen, hat es sich als vorteilhaft erwiesen, wenn die Achse und/oder der Innennabenkörper aus Leichtmetalllegierungen, wie Aluminiumlegierungen oder Magnesiumlegierungen, aufgebaut ist.

Eine besonders leichtgewichtige Fahrradhinterradnabenbaugruppe lässt sich dann erreichen, wenn die Achse aus Faserverbundwerkstoff, wie Kohlefaser-, Aramidfaser- oder Glasfaserverbundwerkstoff hergestellt ist. Auf diese Weise lässt sich auch mit bekannten Mitteln relativ einfach die rotationssymmetrische Struktur der Achse spannungsgerecht gestalten. So ist es nicht zwingend notwendig, dass die Achse aus kreiszylindrischen Abschnitten besteht. Auch elliptische Querschnittsflächen, prismatische Grundflächen oder Grundflächen, die sich entlang der Rotationsachse verändern, sind möglich. Die Gestaltungsfreiheit wird erhöht.

Um die Abriebfestigkeit zu erhöhen und die Langlebigkeit entsprechender Fahrradhinterradnabenbaugruppen zu verbessern, ist es von Vorteil, wenn die Achse im Bereich der Wälzlager auf ihrer Außenseite metallische Oberflächen aufweist.

Die Montagefreundlichkeit wird weiter verbessert, wenn die auf der Achse außen im Bereich der Endabschnitte positionierten Wälzlager durch je eine, durch die Außendurchmesserveränderung gebildete Schulter der Achse, an einer Bewegung aufeinander zu, gehindert sind.

Es ist ferner von Vorteil, wenn der Rotor auf seiner Innenseite eine Schulter aufweist, die einen Außenring eines auf der Achse außen angeordneten Wälzlagers, an dieser anliegend, an einer Bewegung in Richtung der Mitte der Achse hindert. Auf diese Weise wird die statische Bestimmtheit des Gesamtsystems gewährleistet und ein ungewolltes Verschieben des Wälzlagers entlang der Achse unterbunden.

Die wird vereinfacht, wenn zwei im mittigen Bereich der Achse angeordnete Wälzlager, mit deren Innenringen schwimmend, auf der Achse gelagert sind.

Es ist weiter von Vorteil, wenn zwischen dem zweiten Wälzlager, das im größeren Außendurchmesserbereich der Achse angeordnet ist, und im zweiten Krafteinleitungsbereich ein rotationssymmetrisches Zwischenstück angeordnet ist. Die Montage, insbesondere die Vormontage des Nabenkörpers mit dem entsprechenden Wälzlager, wird dadurch erleichtert. Auch lassen sich durch Einbringen von Perforationen in dem Zwischenstück Gewichtseinsparpotenziale heben. Dies wird dann besonders effizient, wenn das Zwischenstück aus einer Leichtmetalllegierung, wie z.B. einer Aluminiumlegierung oder einer Magnesiumlegierung hergestellt ist.

Die Erfindung wird mit Hilfe einer Zeichnung näher erläutert.

So zeigen
- Fig. 1: eine perspektivische schematische Ansicht einer erfindungsgemäßen Fahrradhinterradnabenbaugruppe,
- Fig. 2: eine zweite Ausführungsform einer erfindungsgemäßen Fahrradhinterradnabenbaugruppe,
- Fig. 3: eine dritte Ausführungsform einer erfindungsgemäßen Fahrradhinterradnabenbaugruppe mit einem zylindrischen Mittelstück eines zweiteiligen Nabenkörpers und
- Fig. 4: eine vierte Ausführungsform einer erfindungsgemäßen Fahrradhinterradnabenbaugruppe mit einem zylindrischen Mittelstück eines dreiteiligen Nabenkörpers.

Die Figuren sind lediglich schematischer Natur und dienen nur dem Verständnis der Erfindung. Für die gleichen Elemente werden dieselben Bezugszeichen verwendet.

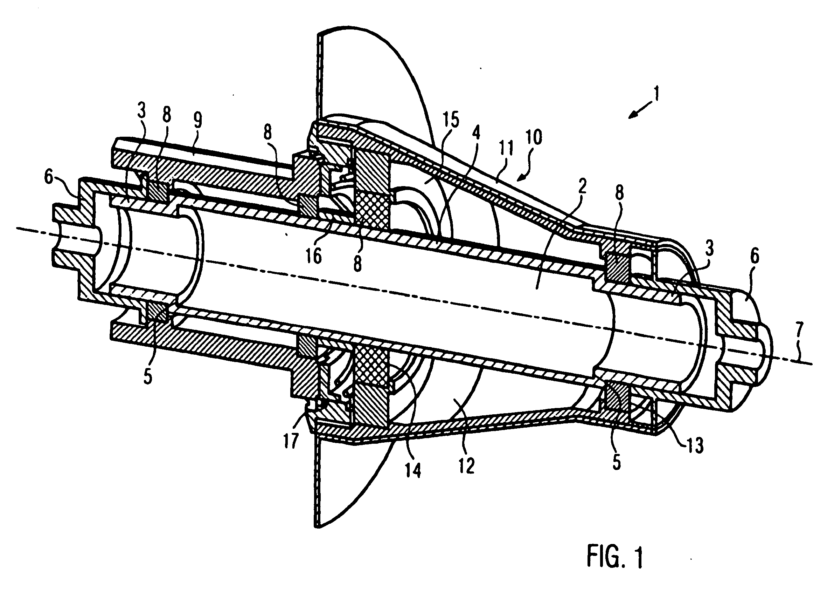

Fig. 1 zeigt eine Fahrradhinterradnabenbaugruppe 1 in schematischer, geschnittener Ansicht. Die Darstellung ist perspektivischer Natur.

Im Inneren der Fahrradhinterradnabenbaugruppe 1 ist eine hohlzylindrische Achse 2 angeordnet. Die Achse 2 weist auf ihren beiden distalen Enden Endabschnitte 3 auf, die einen kleineren Außendurchmesser aufweisen als die Achse in einem mittigen Bereich 4. Die Achse 2 weist achsaußenseitig eines Außendurchmessersprungbereiches also einen kleineren Außendurchmesser als achsinnenseitig davon auf. Der Außendurchmessersprungbereich hat nur nur eine in Richtung der Längsachse der Achse 2 gesehene Erstreckung, die der Dicke der Wandstärke der Achse 2 in diesem Bereich entspricht.

Im Übergangsbereich zwischen dem mittigen Bereich 4 und den Endabschnitten 3 ist jeweils eine Schulter 5 ausgebildet.

Auf die beiden Endabschnitte 3 sind hülsenförmige Ausfallendengegenstücke 6 aufgesteckt.

Die Ausfallendengegenstücke 6 weisen einen Innendurchmesser auf, der bei Berücksichtigung einer Spielpassung im Wesentlichen dem Außendurchmesser der Endabschnitte 3 entspricht. Der Innendurchmesser der Ausfallendengegenstücke 6 kann aber auch kleiner sein, um beim Zusammenbau nicht nur eine formschlüssige Verbindung zwischen den Endabschnitten 3 und den Ausfallendengegenstückne 6 zu erreichen, sondern auch eine kraftschlüssige Verbindung.

Die Fahrradhinterradnabenbaugruppe 1 weist eine Rotationsachse 7 auf, die gleichzeitig die Symmetrie- und Rotationsachse zu der Achse 2, den Ausfallendengegenstücken 6 und den auf der Oberfläche der Achse 2 angebrachten Wälzlagern 8 ist. Die Wälzlager 8 sind als Rillenkugellager ausgebildet.

Konzentrisch zur Rotationsachse 7 und außerhalb der Achse 2, diese umgebend, ist ein Rotor 9 angeordnet. Der Rotor 9 ist auf zwei der im dargestellten Ausführungsbeispiel vier Wälzlager 8 angeordnet. Auch andere Wälzlager, wie Tonnen-, Nadel- und/oder Zylinderwälzlager sind verwendbar.

Die zwei weiteren Wälzlager 8 lagern einen Nabenkörper 10 drehbar zur Achse 2. Der Nabenkörper 10 weist dabei einen Innennabenkörper 11 und einen Außennabenkörper 12 auf.

Der Innennabenkörper 11 ist innerhalb des Außennabenkörpers 12 angeordnet und mit geeigneten stoff-, form- oder kraftschlüssigen Mitteln im Außennabenkörper 12 verbunden. Der Innennabenkörper 11 bietet einem aussenliegenden ersten Wälzlager 13 einen Aufnahmesitz.

Zwischen einem zweiten Wälzlager 14 und dem Innennabenkörper 11 ist ein Zwischenstück 15 angeordnet. Im in Fig. 1 dargestellten Ausführungsbeispiel erstreckt sich der Innennabenkörper 11 zumindest zwischen dem ersten wälzlagernahen Bereich und dem zweiten wälzlagernahen Bereich entlang des Außennabenkörpers 12.

Die als Hohlachse ausgebildete Achse 2 ist im dargestellten Ausführungsbeispiel aus Leichtmetall ausgebildet und weist im Bereich der Endabschnitte 3 Ausfallendengegenstücke 6 auf, wobei die Querschnittsfläche der Achse 2 entlang der Rotationsachse 7 konstant bleibt. Der mittlere Bereich 4 der Achse hat dadurch einen größeren Durchmesser zur Steifigkeitserhöhung.

Es ist auch möglich, dass die Wandstärke der Achse 2 konstant bleibt. Die Biegesteifigkeit bleibt dadurch hoch.

Im dargestellten Ausführungsbeispiel ist der Rotor 9 aus Leichtmetall gefertigt, wie auch der Innennabenkörper 11 und die Ausfallendengegenstücke 6, wobei der Außennabenkörper 12 hingegen aus Faserverbundwerkstoff, insbesondere kunststoffhaltigem Material, hergestellt ist.

Die Ausfallendengegenstücke 6 weisen konzentrische Erweiterungen auf, die auf der einen Seite der Achse 2, groben Schmutz abweisend an der Innenseite des Innennabenkörpers 11 anliegen und auf der anderen Seite der Achse 2 an der Innenseite des Rotors 9, ebenfalls groben Schmutz abweisend, anliegen. Es ist jedoch hier ein Anliegen zu verstehen, dass die Relativrotationen der Elemente zueinander nicht hemmt. Ein kleiner Spalt zwischen den Elementen ist daher akzeptabel.

Die Ergänzung oder Abwandlung als Schleifdichtung ist denkbar. Zusätzlich oder alternativ ist es möglich, auch einen Sprengring achsendseitig der Außenlaufringe der aussenliegenden Wälzlager 8 am Rotor 9 anzuordnen, um ein Verrutschen der Wälzlager 8 zu verhindern. Eine solche Positionierhilfe ist auch zwischen den inneren beiden Wälzlagern 8 angeordnet, nämlich in Form eines Distanzringes 16. Dieser Distanzring 16 ist wiederum hülsenförmig ausgebildet und ist mit einem Spiel von 2/10 mm auf dem Außenumfang der Achse 2, zwischen dem zweiten Wälzlager 14 und dem nächstgelegenen, den Rotor 9 kontaktierenden Wälzlager 8 angeordnet. Die beiden Wälzlager 8, die den Rotor 9 stützen, sind somit in O-Anordnung angebracht, genauso wie die beiden Wälzlager 13 und 14, die den Nabenkörper 10 stützen. Es ist aber auch eine X-Anordnung möglich.

Im Bereich zwischen dem Nabenkörper 10 und dem Rotor 9 ist eine Freilaufvorrichtung 17 angeordnet. Diese wird auch als Freilaufmechanismus bezeichnet.

Wie der Figur 1 gut zu entnehmen ist, weist die Achse 2 durchgehend dieselbe Wandstärke d auf.

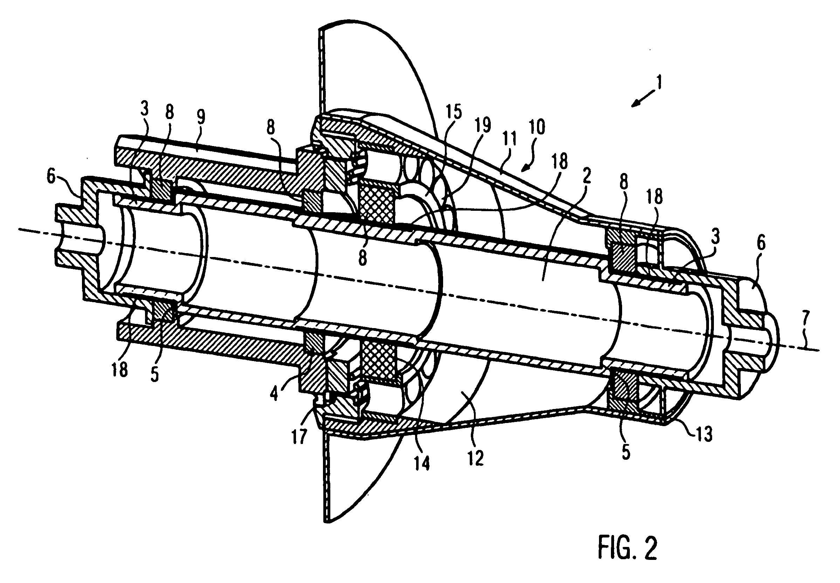

In Fig. 2 ist ein zweites Ausführungsbeispiel einer erfindungsgemäßen Fahrradhinterradnabenbaugruppe dargestellt, wobei für die gleichen Elemente dieselben Bezugszeichen verwendet werden.

Im Unterschied zu der Ausführungsform von Fig. 1, wird jedoch eine Achse 2 verwendet, die entgegen des verwendeten Materials des ersten Ausführungsbeispieles Faserverbundwerkstoffe verwendet, insbesondere Kohlefaser-, Aramidfaser- oder Glasfaserwerkstoffe. Im Bereich der Wälzlager 8 sind Metallisierungen 18 vorgesehen. Die Metallisierungen 18 können als Beschichtungen aufgedampft werden, oder in Form von Inserts in die Achse 2 eingebracht werden, vorzugsweise eingepresst werden.

Als weiterer Unterschied fehlt die Distanzhülse 16 und ist das Zwischenstück 15 perforiert ausgestaltet. Die Perforationen 19 sind als äquidistant zueinander angeordnete umlaufende Bohrungen ausgebildet. Die Bohrungen sind kreisrund ausgebildet.

Um die Gewichtsreduktion des zweiten Ausführungsbeispieles noch zu verbessern, weist der Innennabenkörper 11 in einem Bereich zwischen dem ersten Wälzlager 13 und dem zweiten Wälzlager 14 eine Unterbrechung auf. Der Innennabenkörper 11 ist somit lediglich im unmittelbaren die Wälzkörper 13 und 14 umgebenden Bereich vorhanden.

Wie auch im ersten Ausführungsbeispiel, ist auf dem Rotor 9, der eine Vielzahl von Vorsprüngen aufweist, ein Ritzelpaket oder einzelne Ritzel aufschiebbar und befestigbar. Durch Auflegen einer Kette auf die Ritzel, lässt sich Kraft in den Rotor 9 und über die Freilaufvorrichtung 17 auf den Nabenkörper 10 und somit über nicht dargestellte Speichen auf die Felge und auf einer Straße abrollende Schlauch- und/oder Mantelelemente übertragen.

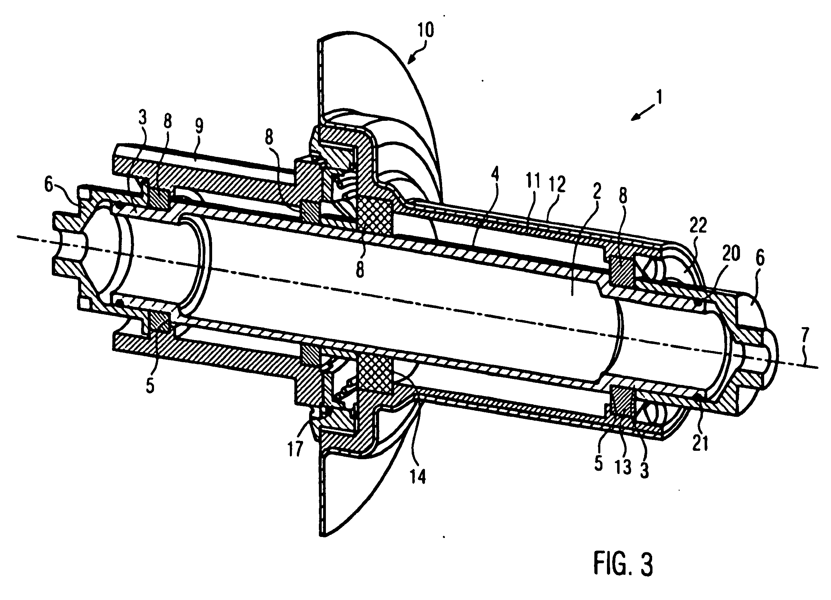

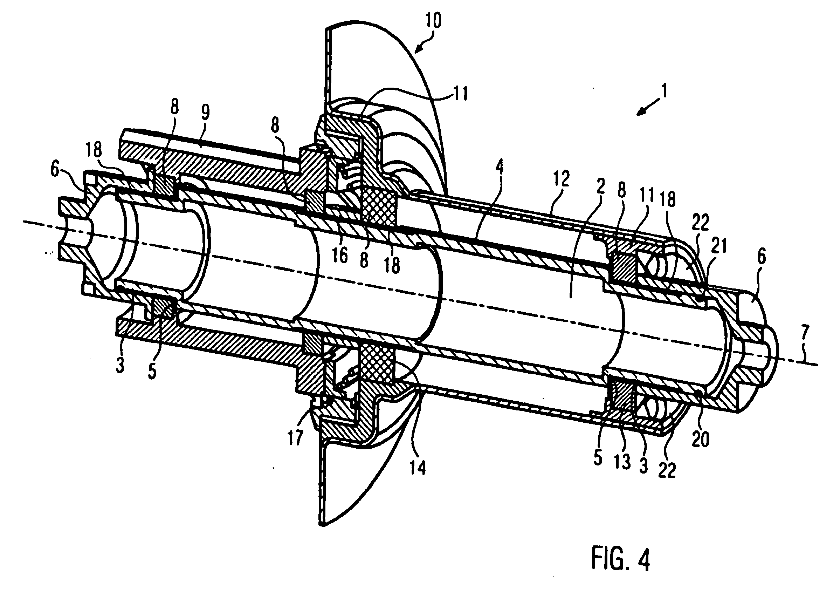

In den Ausführungsbeispielen der Figuren 3 und 4 ist der Nabenkörperdurchmesser im mittleren Bereich auf das Niveau des kleineren Lagerbereichs vermindert worden. Dadurch entfällt das bisher nötige Zwischenstück 15 der ersten beiden Ausführungsbeispiele. Der Außennabenkörper 12 ist nun auch im mittleren Bereich abschnittweise zylindrisch ausgebildet.

Es ist ferner eine umlaufende Nut 20 auf dem nabenkörperseitigen Endabschnitt eingebracht. In dieser Nut ist ein O-Ring 21 aus elastischem Material, wie Gummi eingelegt. Dieser O-Ring 21 stellt eine Lagesicherung zwischen der Achse 2 und dem Ausfallendengegenstück 6 sicher. Es sind auch zur Nut 20 gegengleiche Rillen auf der Innenseite des Ausfallendengegenstücks 6 eingearbeitet. Beim Abziehen des in der Zeichnung rechten Ausfallendengegenstücks 6 verbleibt der O-Ring 21 auf der Achse 2. Dies erleichtert die Montage. Die Durchmesser des O-Rings 21, der Nut 20 und der Rille sind entsprechend gewählt und berücksichtigen eventuell notwendige Abweichungen.

Am nabenkörperseitigen Ende der Achse 2 stellt eine mit einem Außengewinde versehene und in den Innennabenkörper 11 einschraubbare Scheibe 22 eine Lagersicherung für das äußere Wälzlager 8 dar. Auf diese Weise erübrigt sich die in den ersten beiden Ausführungsbeispielen benötige flanschartige konzentrische Erweiterung des Ausfallendengegenstücks 6, das sich dort in Richtung des Innennabenkörpers 11 erstreckt.

Das Ausführungsbeispiel gem. Figur 4 ist eine Abwandelung der Ausführungsbeispiele der Figuren 2 und 3. So ist bei diesem vierten Ausführungsbeispiel einerseits, wie beim zweiten Ausführungsbeispiel, eine Achse 2 aus Kohlefaserverbundwerkstoff mit einer Metallisierung versehen und der Nabenkörper 11 dreiteilig ausgestaltet, und andererseits, wie beim dritten Ausführungsbeispiel, der Nabenkörper 12 mehrstufig zylindrisch ausgestaltet, wobei die Scheibe 22 eine Lagersicherung bildet.

In allen Varianten ist es möglich, eine Freilaufvorrichtung 17 mit einer Zahnscheibe zu verwenden, die in ihren formschlussermöglichenden Elementen Perforationen aufweist.

## Patentansprüche

1. Fahrradhinterradnabenbaugruppe (1) mit einer hohlzylindrischen Achse (2) mit zwei jeweils auf einen Endabschnitt (3) der Achse (2) aufsteckbaren Ausfallendengegenstücken (6), mit einem die Achse (2) abschnittsweise umgebenden hohlzylindrisch ausgestalteten Rotor (9) und einem hohlen, die Achse (2) umgebenden Nabenkörper (10), wobei der Rotor (9) und der Nabenkörper (10) durch an der Achse (2) angeordnete Wälzlager (8) drehbar gelagert sind, **dadurch gekennzeichnet, dass** die Achse (2) im Bereich der Endabschnitte (3) achsaußenseitig eines Außendurchmessersprungbereichs der Achse (2) einen geringeren Außendurchmesser als in einem mittigen Bereich (4) aufweist, und eine senkrecht zu einer Rotationsachse (7) stehende Querschnittsfläche der Achse (2) entlang der gesamten Rotationsachse (7) um maximal 25% variiert, mit Ausnahme des Außendurchmessersprungbereichs, an den die achsaußenseitigen Wälzlager (8) angrenzen.

2. Fahrradhinterradnabenbaugruppe (1) nach Anspruch 1, **dadurch gekennzeichnet, dass** die Querschnittsfläche um weniger als 15% variiert.

3. Fahrradhinterradnabenbaugruppe (1) nach Anspruch 2, **dadurch gekennzeichnet, dass** die Querschnittsfläche konstant ist.

4. Fahrradhinterradnabenbaugruppe (1) nach einem der Ansprüche 1 bis 3, **dadurch gekennzeichnet, dass** der Nabenkörper (10) mehrteilig ausgeführt ist.

5. Fahrradhinterradnabenbaugruppe (1) nach Anspruch 4, **dadurch gekennzeichnet, dass** der Nabenkörper (10) zumindest in einem zu den Wälzlagern (8) benachbarten Krafteinleitungsbereich zumindest einen Innennabenkörper (11) aufweist, der auf seiner Außenseite von einem separaten Außennabenkörper (12) umgeben ist.

6. Fahrradhinterradnabenbaugruppe (1) nach Anspruch 5, **dadurch gekennzeichnet, dass** sich der Innennabenkörper (11) durchgehend von einem ersten Krafteinleitungsbereich, benachbart zu einem ersten Wälzlager (13), zu einem zweiten Krafteinleitungsbereich, benachbart zu einem zweiten Wälzlager (14), durchgehend erstreckt.

7. Fahrradhinterradnabenbaugruppe (1) nach Anspruch 6, **dadurch gekennzeichnet, dass** der Außennabenkörper (12) aus Faserverbundwerkstoff hergestellt ist, wie Kohlefaser-, Aramidfaser- oder Glasfaserverbundwerkstoff.

8. Fahrradhinterradnabenbaugruppe (1) nach einem der Ansprüche 6 oder 7, **dadurch gekennzeichnet, dass** der Innennabenkörper (11) zweiteilig ausgebildet ist, derart, dass er zwischen dem ersten Krafteinleitungsbereich und dem zweiten Krafteinleitungsbereich unterbrochen ausgestaltet ist.

9. Fahrradhinterradnabenbaugruppe (1) nach einem der Ansprüche 1 bis 8, **dadurch gekennzeichnet, dass** die Achse (2) und/oder der Innennabenkörper (11) aus Leichtmetalllegierungen, wie Aluminiumlegierungen oder Magnesiumlegierungen aufgebaut ist oder die Achse (2) aus Faserverbundwerkstoff, wie Kohlefaser-, Aramidfaser- oder Glasfaserverbundwerkstoff hergestellt ist und/oder die Achse (2) im Bereich der Wälzlager (8) auf ihrer Außenseite metallische Oberflächen aufweist.

10. Fahrradhinterradnabenbaugruppe (1) nach einem der Ansprüche 1 bis 9, **dadurch gekennzeichnet, dass** die auf der Achse außen im Bereich der Endabschnitte (3) positionierten Wälzlager (8) durch je eine Schulter (5) der Achse (2), die durch die Außendurchmesserveränderung gebildete ist, an einer Bewegung aufeinander zu gehindert sind und/oder der Rotor (9) auf seiner Innenseite eine Schulter aufweist, die einen Außenring eines auf der Achse (2) außen angeordneten Wälzlagers (8), an diesem anliegend, an einer Bewegung in Richtung der Mitte der Achse (2) hindert und vorzugsweise zwei im mittigen Bereich (4) der Achse (2) angeordnete Wälzlager (8) mit deren Innenringen schwimmend auf der Achse (2) gelagert sind, wobei weiter vorzugsweise zwischen dem zweiten Wälzlager (14), das im größeren Außendurchmesserbereich der Achse (2) angeordnet ist, und dem zweiten Krafteinleitungsbereich des Innennabenkörpers (11) ein rotationssymmetrisches Zwischenstück (15) angeordnet ist.

## Claims

1. A bicycle rear hub component (1) comprising a hollow-cylindrical axle (2) and two dropout counter pieces (6) adapted to be attached to a respective end portion (3) of the axle (2), a hollow-cylindrical rotor (9) surrounding the axle (2) along a certain section thereof, and a hollow hub shell (10) surrounding the axle (2), said rotor (9) and said hub shell (10) being rotatably supported by means of ball bearings (8) arranged on the axle (2), **characterized in that**, in the area of the end portions (3), the axle (2) has, on the outer side of an outer diameter change region of the axle (2), an outer diameter which is smaller than the diameter in a middle region (4) thereof, and that a cross-sectional area of the axle (2) extending perpendicular to a rotational axis (7) varies by a maximum of 25% along the whole rotational axis (7), with the exception of the outer diameter change region onto which the ball bearings (8) on the outer side of the axle border.

2. The bicycle rear hub component (1), according to claim 1, **characterized in that** the cross-sectional area varies by less than 15%.

3. The bicycle rear hub component (1) according to claim 2, **characterized in that** the cross-sectional area does not vary.

4. The bicycle rear hub component (1) according to one of the claims 1 to 3, **characterized in that** the hub shell (10) is configured as a multipart component.

5. The bicycle rear hub component (1) according to claim 4, **characterized in that**, at least in a force application area located adjacent the ball bearings (8), the hub shell (10) includes at least one inner hub shell (11) surrounded by a separate outer hub shell (12) on the outer side thereof.

6. The bicycle rear hub component (1) according to claim 5, **characterized in that** the inner hub shell (11) extends continuously from a first force application area, adjacent a first ball bearing (13), to a second force application area, adjacent a second ball bearing (14).

7. The bicycle rear hub component (1) according to claim 6, **characterized in that** the outer hub shell (12) is made of a fiber composite material, such as a carbon fiber, an aramid fiber or a glass fiber composite material.

8. The bicycle rear hub component (1) according to claim 6 or 7, **characterized in that** the inner hub shell (11) is a two-part component of such a nature that it is interrupted between the first force application area and the second force application area.

9. The bicycle rear hub component (1) according to one of the claims 1 to 8, **characterized in that** the axle (2) and/or the inner hub shell (11) are formed of light metal alloys, such as aluminum alloys or magnesium alloys, or that the axle (2) is formed of a fiber composite material, such as a carbon fiber, an aramid fiber or a glass fiber composite material, and/or that the axle (2) has metallic surfaces on the outer side thereof in the area of the ball bearings (8).

10. The bicycle rear hub component (1) according to one of the claims 1 to 9, **characterized in that** the ball bearings (8) positioned on the outer side of the axle (2) in the area of the end portions (3) are prevented from moving towards each other by a respective shoulder (5) of the axle (2) defined by the change in outer diameter, and/or that the rotor (9) has on the inner side thereof a shoulder which abuts on an outer ring of a ball bearing (8) arranged on the outer side of the axle (2) and prevents said outer ring from moving towards the middle of the axle (2), and that preferably two ball bearings (8), which are arranged in the middle area (4) of the axle (2), have their inner rings float-mounted on the axle (2), and that, in addition, a rotation-symmetric intermediate piece (15) is disposed preferably between the second ball bearing (14), which is arranged in the region of the axle (2) having the larger outer diameter, and the second force application area of the inner hub shell (11).

## Revendications

1. Bloc de moyeu de roue arrière de vélo (1) comprenant un essieu cylindrique creux (2) avec deux pendants émergents (6) pouvant chacun être emboîtés sur une section d'extrémité (3) de l'essieu (2), comprenant un rotor (9) configuré de manière cylindrique creuse entourant l'essieu (2) par section et un corps de moyeu creux (10) entourant l'essieu (2), dans lequel le rotor (9) et le corps de moyeu (10) sont logés à rotation à travers des paliers à roulement (8) disposés sur l'essieu (2), **caractérisé en ce que** l'essieu (2) présente dans la région des sections d'extrémité (3) du côté externe de l'essieu d'une région de saut de diamètre externe de l'essieu (2) un diamètre externe inférieur à dans une région centrale (4) et une surface de section transversale de l'essieu (2) étant perpendiculaire à un axe de rotation (7) varie le long de l'axe de rotation entier (7) de 25 % maximum, à l'exception de la région de saut de diamètre externe à laquelle les paliers à roulement (8) du côté externe de l'essieu sont adjacents.

2. Bloc de moyeu de roue arrière de vélo (1) selon la revendication 1, **caractérisé en ce que** la surface de section transversale varie de moins de 15 %.

3. Bloc de moyeu de roue arrière de vélo (1) selon la revendication 2, **caractérisé en ce que** la surface de section transversale est constante.

4. Bloc de moyeu de roue arrière de vélo (1) selon l'une quelconque des revendications 1 à 3, **caractérisé en ce que** le corps de moyeu (10) est réalisé en plusieurs parties.

5. Bloc de moyeu de roue arrière de vélo (1) selon la revendication 4, **caractérisé en ce que** le corps de moyeu (10) présente au moins dans une région d'introduction de force voisine des paliers à roulement (8) au moins un corps de moyeu interne (11) qui est entouré sur son côté externe d'un corps de moyeu externe séparé (12).

6. Bloc de moyeu de roue arrière de vélo (1) selon la revendication 5, **caractérisé en ce que** le corps de moyeu interne (11) s'étend en continu d'une première région d'introduction de force voisine d'un premier palier à roulement (13) à une seconde région d'introduction de force voisine d'un second palier à roulement (14).

7. Bloc de moyeu de roue arrière de vélo (1) selon la revendication 6, **caractérisé en ce que** le corps de moyeu externe (12) est fabriqué à partir de matériau composite renforcé par des fibres, comme un matériau composite renforcé par des fibres de carbone, des fibres d'aramide ou des fibres de verre.

8. Bloc de moyeu de roue arrière de vélo (1) selon l'une quelconque des revendications 6 ou 7, **caractérisé en ce que** le corps de moyeu interne (11) est réalisé en deux parties de telle sorte qu'il est conçu de manière interrompue entre la première région d'introduction de force et la seconde région d'introduction de force.

9. Bloc de moyeu de roue arrière de vélo (1) selon l'une quelconque des revendications 1 à 8, **caractérisé en ce que** l'essieu (2) et/ou le corps de moyeu interne (11) est construit à partir d'alliages de métaux légers, comme des alliages d'aluminium ou des alliages de magnésium, ou l'essieu (2) est fabriqué à partir de matériau composite renforcé par des fibres, comme un matériau composite renforcé par des fibres de carbone, des fibres d'aramide ou des fibres de verre et/ou l'essieu (2) présente des surfaces métalliques sur son côté externe dans la région des paliers à roulement (8).

10. Bloc de moyeu de roue arrière de vélo (1) selon l'une quelconque des revendications 1 à 9, **caractérisé en ce que** les paliers à roulement (8) positionnés sur l'essieu à l'extérieur dans la région des sections d'extrémité (3) sont empêchés d'un mouvement l'un vers l'autre par chacun un épaulement (5) de l'essieu (2) qui est formé par la variation de diamètre externe et/ou le rotor (9) présente un épaulement sur son côté interne qui empêche un anneau externe d'un palier à roulement (8) disposé à l'extérieur sur l'essieu (2), reposant sur celui-ci, d'un mouvement en direction du milieu de l'essieu (2) et deux paliers à roulement (8) disposés dans la région centrale (4) de l'essieu (2) sont de préférence logés avec leurs anneaux internes de manière flottante sur l'essieu (2), dans lequel une pièce intermédiaire à symétrie de rotation (15) est en outre disposée de préférence entre le second palier à roulement (14) qui est disposé dans la région de diamètre externe supérieure de l'essieu (2) et la seconde région d'introduction de force du corps de moyeu interne (11).
